# EUROPEAN PATENT APPLICATION

(11) **EP 1 608 128 A1**
(43) Date of publication of application: **21.12.2005**
(21) Application number: 05105240.5
(22) Date of filing: 15.06.2005
(51) Int. Cl.: H04L 29/06

(54) **Spontaneous discovery of remote service profiles**

(30) Priority: 15.06.2004 GB 0413431
(71) Applicant: Mitel Networks Corporation, Ottawa, Ontario K2K 2W7 (CA)
(72) Inventor: Liscano, Ramiro, K2H 6X9, Ontario (CA); Hu, Hao, 2299 Yanan Road Shanghai 2000 (CN); Jost, Allan, B4A 4A3, Nova Scotia (CA); Gray, Thomas, J0X 1V0, Mansfield (CA)
(74) Representative: Read, Matthew Charles

(57) **Abstract**

A system for providing spontaneous discovery of remote service profiles is provided. A Bluetooth-enabled communication end point registers the service profiles available on Bluetooth devices in communication with the end point over a personal area network. The end point then translates the service profiles to a format supported over a second network and transmits them to other end points. The other end point then registers the service profiles and translates them to a format understood by Bluetooth devices. Bluetooth devices local to the second end point can then communicate with the remote Bluetooth devices via the translated service profiles.

## Description

### FIELD OF THE INVENTION

The present invention relates to the provision of remote services to wireless devices and, more particularly, the provision of services located outside of a wireless network to Bluetooth and infrared devices therein.

### BACKGROUND OF THE INVENTION

Telephone communications and, more recently, video conferencing and instant messaging conversations are currently the standard for simultaneous multiparty communications. During these sessions, there are times that the participants want to share data and/or access resources that are not hosted on the communication end points but are available on a portable device of one of the participants. Current spontaneous networking technology like Bluetooth and Infrared allow these portable devices to form a local area network with the communication end point, commonly referred to as a wireless personal area network ("wireless PAN" or "WPAN"), as communication over these networking technologies is limited to short distances (e.g., ten meters or less) relative to those available with wired and other wireless communication technologies.

Bluetooth is a short-ranged, low power consumption standard for ad-hoc radio frequency communications between electronic devices and is defined by the Specification of the Bluetooth System (the "Bluetooth Specification"), as published by the Bluetooth Special Interest Group and available at http://www.bluetooth.org/, the contents of which are incorporated by reference herein.

Service profiles are defined standard sets of functionality that are possessed by a device. An example of a common service profile for Bluetooth networking is the Basic Imaging Profile, which supports the transfer and manipulation of JPEG images. The Basic Imaging Profile defines a number of commands, including "Image Push" for transmitting an image to a another device, "Image Pull" for requesting an image from another device, "Advanced Image Printing" for printing an image on another device with printing functionality, "Automatic Archive" for synchronizing images between devices, "Remote Camera" to remotely control camera functionality on another device and "Remote Display" to control the display of images on a remote device. As used hereinafter, service and service profile will be used interchangeably. Service profiles are stored in a local directory in a WPAN, which allows Bluetooth devices in the WPAN to see what service profiles the other devices offer. Access to the local directory of service profiles, however, is not available outside of the WPAN and, thus, the functionality provided by the Bluetooth devices in the WPAN is not readily available to devices outside the WPAN.

Generally, current systems for service profile discovery implement a homogeneous service discovery protocol across heterogeneous networks such as some radio frequency networks, including Bluetooth, and Internet Protocol networks, such as the Internet and various local area networks ("LANs"). One such implementation is proposed in PCT International Publication Number WO 01/76154 to Laurent Marchand whereby Jini, created by Sun Microsystems, Inc., is used as the uniform service discovery protocol across all devices including those supporting Bluetooth. Similarly, a method of using a proxy-bridge to connect remote users to a WPAN is disclosed in U.S. Patent Application Number 2001/0033554 to Arun Ayyagari et al., wherein a homogeneous service discovery protocol, in this case the Universal Plug and Play protocol, is imposed on the local networked devices.

Another method of providing service discovery is disclosed by Markus Albrecht, Matthias Frank, Peter Martini, Markus Schetelig, Asko Vilavaara, and Andre Wenzel in "IP Services over Bluetooth: Leading the Way to a New Mobility", Proceedings of the 24^{th} Annual Conference on Local Computer Networks, Lowell, Massachusetts, October 1999. Albrecht et al. focus solely on the issue of providing a uniform IP communication layer across wireless networks like Bluetooth. This has led to the Bluetooth Personal Area Network (PAN) Profile that supports Ethernet over Bluetooth. Albrecht et al., however, assume that any uniform service discovery protocol could be used for service discovery and do not discuss the management of current Bluetooth service profiles between users in an established session.

### SUMMARY OF THE INVENTION

The present invention provides an apparatus and method for providing access to services offered by local Bluetooth-compliant or like devices. The local Bluetooth devices are first enumerated and queried to determine what service profiles each device is capable of supporting. The service profiles, originally accessible only through Bluetooth Service Directory Protocol, are first translated to a protocol common to other devices, such as Service Locator Protocol, and are then stored in a service directory accessible to remote devices. A service map is employed to record the translation. The service directory is operable to receive and respond to requests for a list of service profiles available through the end point. The local Bluetooth devices and the remote device in communication therewith can thus share services via a common user-level protocol, such as the Object Exchange protocol.

In another aspect, the present invention provides Bluetooth devices local to an end point with access to services offered remotely. The end point queries a remote device to determine what service profiles are supported by and are available through the remote device. The service profiles are then translated to a format understood by the local devices and can be stored in either format. A service map is employed to record the translation. The local Bluetooth devices can query the end point to find out what service profiles are offered through the end point, including the remote service profiles that appear to be offered locally.

### BRIEF DESCRIPTION OF THE DRAWINGS

Preferred embodiments of the present invention will now be described, by way of example only, with reference to the attached Figures, wherein:
Figure 1 shows a schematic representation of the invention in accordance with an embodiment thereof;
Figure 2 shows a typical hardware configuration in accordance with the embodiment of the invention of Figure 1, consisting of a number of devices;
Figure 3 shows a schematic representation of a communications end point, in accordance with an embodiment of the invention;
Figure 4 shows a method of providing spontaneous service profile discovery in accordance with an embodiment of the invention;
Figure 5 shows a schematic representation of the components of an end point, in accordance with an embodiment of the invention;
Figure 6 shows a protocol for communication between end points, in accordance with an embodiment of the invention;
Figure 7 shows a schematic representation of an interaction model between the Session Initiation Protocol ("SIP") User Agent and the SLP User Agent in accordance with an embodiment of the invention;
Figure 8 shows a schematic representation of a service profile translation in accordance with an embodiment of the invention;
Figure 9 shows a schematic representation of a service profile discovery and registration in accordance with an embodiment of the invention;
Figure 10 shows a schematic representation of a service profile discovery and registration between two end points in accordance with an embodiment of the invention;
Figure 11 shows a schematic representation of a set of datagrams employed in accordance with an embodiment of the invention;
Figure 12 shows a schematic representation of a exemplary registration of a non-Bluetooth device supporting a Bluetooth service profile;
Figure 13 shows a schematic representation of a service profile discovery and exchange between two end points of the embodiment of Figure 12; and
Figure 14 shows a schematic representation of a set of datagrams employed in the embodiment of Figure 12.

### DETAILED DESCRIPTION OF THE INVENTION

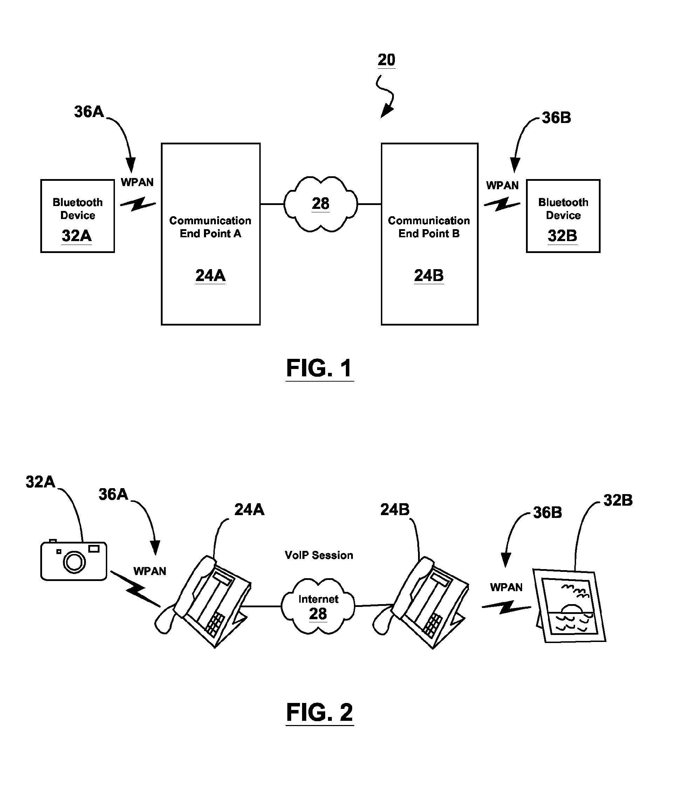

Figure 1 depicts a system 20 for providing spontaneous discovery of remote service profiles in accordance with an embodiment of the invention. System 20 consists of two communication end points 24A and 24B for a voice, video conferencing and/or instant messaging session over a common network 28, wherein each of the end points 24A an 24B has a non-Internet Protocol-based wireless network interface for communication with wireless devices 32A and 32B over WPANs 36A and 36B respectively. Wireless devices 32A and 32B are capable supporting the creation of a local Bluetooth or IRDA network with other wireless devices in the vicinity. In the illustrated embodiment, end points have Bluetooth networking interfaces for communication with Bluetooth-enabled devices. Network 28 is a local area network or a wide area network employing an addressing protocol such as IP.

A particular implementation of an embodiment of the invention is shown generally in Figure 2, wherein end points 24A and 24B are IP-based telephone sets shown in communication over an IP network 28, the Internet in this case. Bluetooth device 32A is a digital camera that is Bluetooth-enabled is in communication with end point 24A forming WPAN 36A. Bluetooth device 32B is a digital picture frame having an active matrix display area and that is in communication with end point 24B. Both Bluetooth devices 32A and 32B have Basic Imaging Profiles, allowing, for example, digital camera 32A to issue a "Remote Display" command to picture frame 32B and cause the display of an image captured by digital camera 32A.

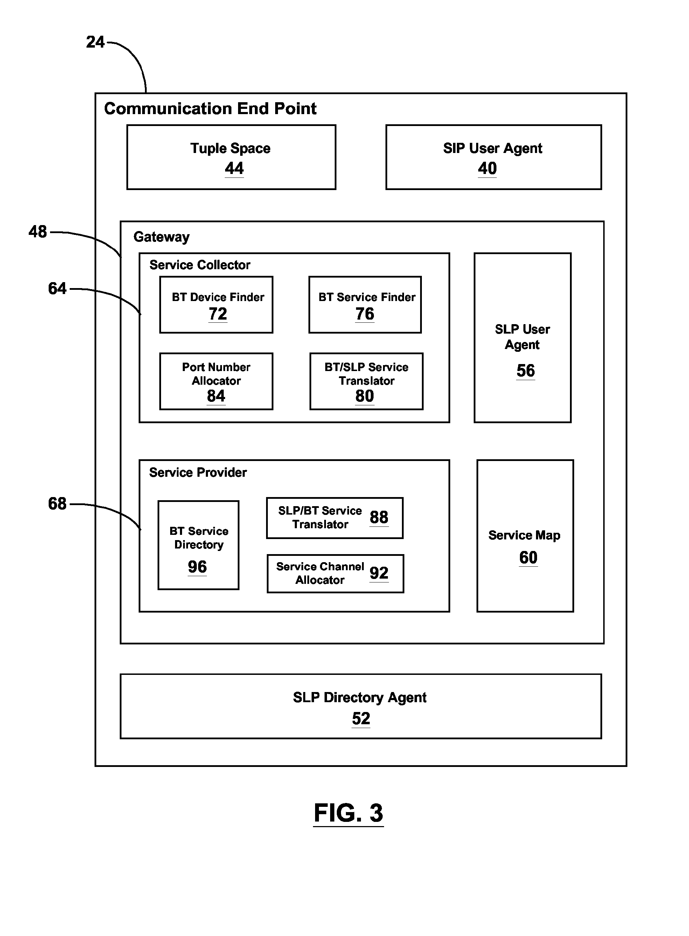

Figure 3 shows a number of logical components of a communication end point 24. End point 24 is comprised of a SIP user agent ("UA") 40, a Tuple space 44, a gateway service module ("gateway") 48 and a Service Location Protocol ("SLP") Directory Agent ("DA") 52. SIP user agent 40 is a set of functionality that allows end points 24 to communicate with each other using SIP, an Internet Engineering Task Force (IETF) standard protocol for initiating an interactive user session that involves multimedia elements such as video, voice and chat.

Gateway 48 supports both IETF standard SLP and Bluetooth Service Discovery Protocol ("SDP") thereby enabling the gateway 48 to act as a client and server for location services to both IP and Bluetooth networked devices via SLP and Bluetooth SDP, respectively. Gateway 48 consists of an SLP user agent 56, a service map 60, a service collector 64 and a service provider 68. The primary function of SLP user agent 56 is to communicate with SLP DA 52 of another end point in order to obtain a list of service profiles that are available thereon. Service Type Service map 60 is comprised of a table of one-to-one relationships between service profiles listed in SLP format and service profiles listed in SDP format. Service collector 64 is responsible for the collection of the list of service profiles available on Bluetooth devices with which end point 24 is in communication over a WPAN. Service collector 64 is shown being comprised of a Bluetooth ("BT") device finder 72, a Bluetooth service finder 76, a Bluetooth/SLP service translator 80 and a port number allocator 84. Service provider 68 is responsible for providing Bluetooth devices in communication with end point 24 a list of service profiles available through end point 24. Service provider 68 is comprised of a SLP / Bluetooth service translator 88, a service channel allocator 92 and a Bluetooth service directory 96. SLP DA 40 registers discovered service profiles from various sources in an SLP format.

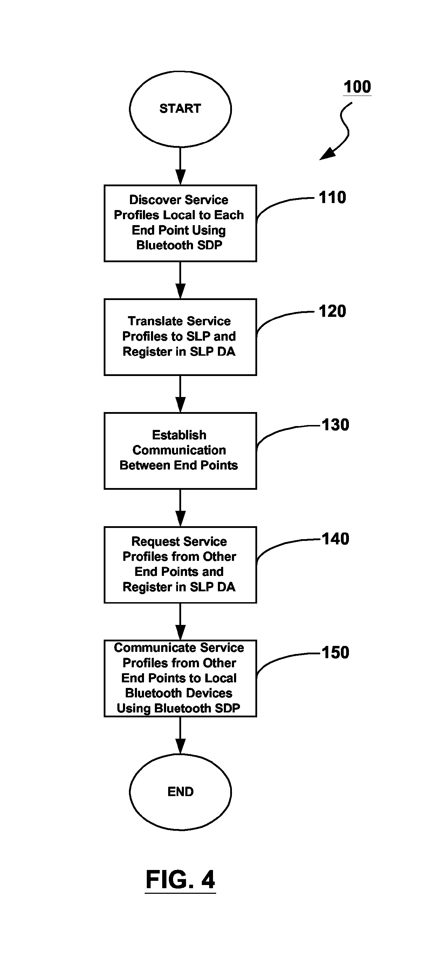

Now referring to Figure 4, in combination with Figures 1, 2 and 3, a method of providing spontaneous discovery of remote service profiles in accordance with an embodiment of the invention is shown generally at 100. At step 110, each gateway 48 discovers service profiles, using Bluetooth SDP, available on Bluetooth devices local to the end point 24 on which gateway 48 resides. SDP is a protocol forming part of the Bluetooth Specification that allows one Bluetooth-enabled device to discover what service profiles are available through another Bluetooth-enabled device. The discovery is performed through a request to a device for a list of service profiles offered by the device and a response by the device indicating the list of service profiles. Generally, as new devices are detected at an end point, they will be identified to gateway 48 as it makes SDP requests to the end point local to the new devices and receives SDP responses to these requests identifying the service profiles offered by the newly-discovered devices.

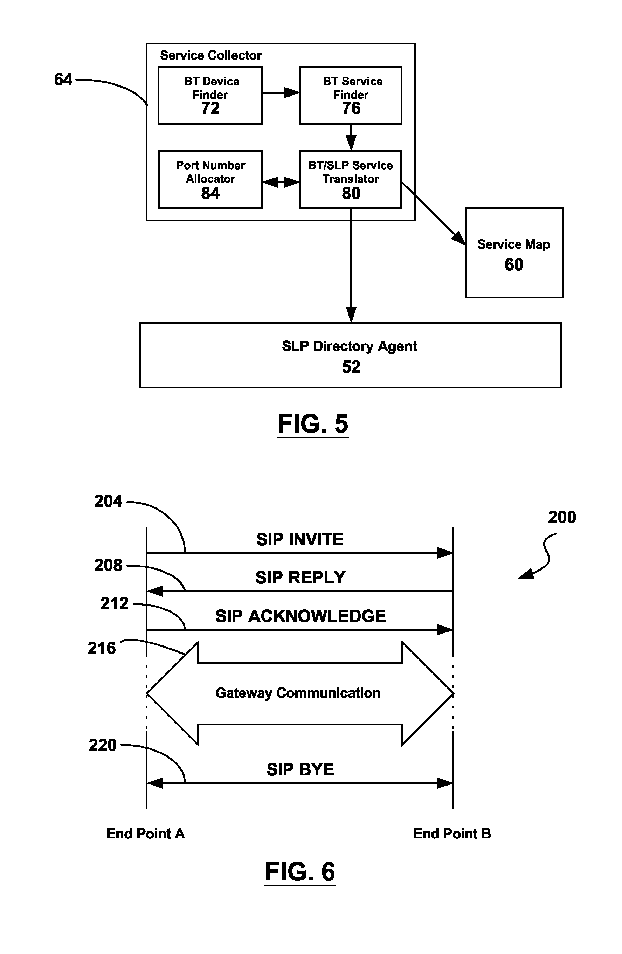

Gateways 48 and their respective communication interactions in end point 24 that are involved in the local service collection and registration are depicted in Figure 5. The service collection procedure starts with Bluetooth device finder 72. To discover locally-available Bluetooth devices, Bluetooth device finder 72 sends out Bluetooth device inquiry messages. If there are some available Bluetooth devices, they will send back response message with their reachable addresses. Once service collector 64 is in possession of the addresses of one or more Bluetooth devices, Bluetooth service finder 76 is directed to commence discovery of any service profiles available on the found devices. The discovered service profiles are identified by the address of the hosting Bluetooth device and a RFComm server channel number ("SCN"), together forming a Bluetooth service profile address. This procedure conforms to the Bluetooth service profile discovery standard, as set out in "Personal Area Networking Profile", by the Bluetooth Special Interest Group and available at http://www.bluetooth.org/.

Then, at step 120, the service profiles discovered at step 110 are translated to SLP format by gateway 48 and registered in SLP DA 40. The main responsibility of the local service collection is to discover and collect all available service profiles in the local WPAN, then translate them into the format of an SLP service and register this service with a local SLP Directory Agent. By doing so, all the service profiles in one end will appear to the other end as if they all are provided by the end point itself. When the service collection is done, the discovered service profiles must be translated into the format of an SLP service profile. As both Bluetooth SDP and SLP service profiles is composed of similar service elements, basically a set of tuples that define an attribute name and its value, Bluetooth / SLP service translator 80 parses the Bluetooth service information into a basic service element and then reassembles it to conform to the SLP format. For any SLP service, there must be an associated IP address and port number. Bluetooth / SLP service translator 80 assigns the end point IP address to the service profile IP address and, for the port number, a new unused port number is requested from port number allocator 84. Gateway 48 then registers the mapping between the new translated SLP service profile and the original Bluetooth service profile with service map 60 for future use. At this point, gateway 48 registers the new SLP service profile with SLP DA 52 by using the SLP Unicast Service Register method.

At step 130, end points 24 establish communication with each other. Where the invention is implemented on the system of Figure 2, a user of end point 24A can establish a telephone call with end point 24B over the Internet using Voice over IP (VoIP). In particular, SIP user agent 40 of end point 24A initializes a communication with end point 24B.

Figure 6 shows a number of transmissions between end points 24A and 24B forming a SIP communication session 200. End point 24A sends an initial SIP invite request 204. Where end point 24B is enabled and a user thereof accepts the call, such as by picking up the handset, end point 24B replies with a SIP reply 208. Upon receipt of SIP response 208, end point 24A transmits a SIP acknowledge 212, thus establishing the communication session. At this point, as both end points 24A and 24B are now aware of each other's IP address, end points 24A and 24B are ready to send and receive communications from each other, including voice data, service profile discovery and user data (such as a file transferred from digital camera 32A to picture frame 32B). By acquiring the IP address of each other end point 24, end points 24A and 24B can limit the scope of service discovery requests to those specific IP addresses. These communications between the end points 24A and 24B are shown at 216. The communication session is ended by the transmission of a SIP bye 220 by one of end points 24A and 24B. Once the communication session 200 is ended, access to services between end points 24A and 24B is no longer available.

Referring back to communications 204, 208 and 212, once the SIP handshake is completed with the transmission of SIP acknowledge 212 and the communication session is open, method 100 advances to step 140.

While the process of collecting and registering local service profiles in accordance with steps 110 and 120 is performed before communication is established between end points at step 130 of the method illustrated in Figure 4, it should be noted that the local service profiles can be collected and registered before, during and after communication between end points is established. Further, local service collection and registration can be performed periodically by gateway 48 in order to reduce the time for service exchange when two or more end points 24 establish a session. Still further, local service collection and registration can be performed by gateway 48 independent of any communications between end points 24A and 24B.

Next, at step 140, gateway 48 of each end point 24 makes SLP requests to SLP DAs 52 of other end points 24 and, in return, other end points 24 make an SLP response with the service profiles of devices accessible through them. Gateway 48 is alerted to the existence of a SIP session by SLP UA 56. SLP UA 56 registers for a SIP session event by way of shared Tuple space 44. Any shared or messaging mechanism can be used to provide notifications but Tuple space 44 offers a mechanism for one process to subscribe to the events of another process.

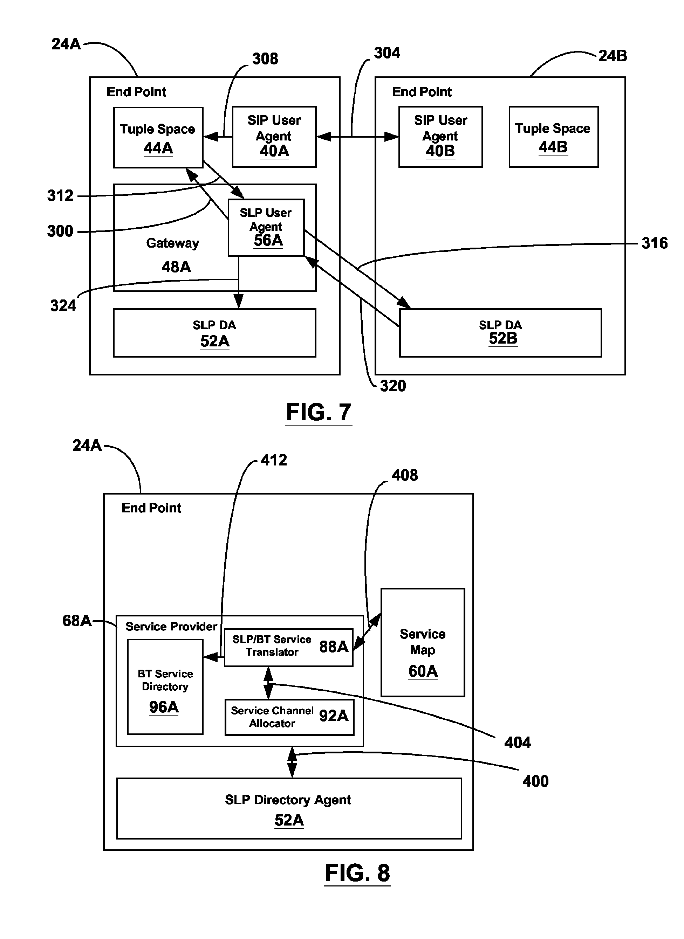

Figure 7 is a diagram showing the interaction between SIP User Agent 40A and SLP User Agent 56A of end point 24A. SIP UA 40A can trigger SLP UA 56A to start the querying process between SLP UA 56A in end point 24A and SLP DA 52B in end point 24B. At 300, SLP UA 56A registers a Peer-DA Address Event in Tuple space 44A. After SIP UA 40A of end point 24A establishes a communications session at 304 with SIP UA 40B of end point 24B, it communicates a Peer-DA Address Event containing the IP address of SLP DA 52B on end point 24B to Tuple space 44A at 308. Tuple space 44A then notifies SLP UA 56A that its registered event has occurred at 312. Finally, SLP UA 56A can send an SLP unicast service request query to SLP DA 52B at 316 because it now is aware of the IP address of end point 24B upon which SLP DA 52B resides.

SLP DA 52B receives the query and responds at 320 with the registered service profiles available through end point 24B. Once the SLP responses are received from SLP DA 52B, they are registered in SLP DA 52A at 324. This service exchange can be performed at any time during the SIP session and conforms to the IETF SLP protocol standard for communication between the two end points. This requires that a gateway support an SLP User Agent so that it can query the other end points in the session.

A key component of the service discovery model implemented by gateways 48 is that the gateways periodically exchange service profile requests while the communication session is active. Gateway 48 can save a local cached copy of the service profiles available at other end points 24 therefore saving on the time it would take to translate a service request from a first Bluetooth device 32A from SDP to SLP and back again at the other end.

At step 150, once SLP DA 52A of end point 24A has been populated with service profiles available from all connected end points 24 and Bluetooth devices 32 associated therewith, end point 24A can receive a Bluetooth SDP request from a Bluetooth device 32A and reply with a complete list of all service profiles that are available to Bluetooth device 32A, either in the same WPAN 36A or remote from end point 24A.

Figure 8 shows a method of providing Bluetooth devices access to the service profiles registered on end point 24A, in accordance with an embodiment of the invention. Since Bluetooth device 32A local to end point 24A cannot access the queried SLP service information, the service profiles must be translated into the format of Bluetooth SDP service profiles. At 400, Bluetooth service provider 68A queries SLP DA 52A to obtain a list of available services and the results are provided to SLP /Bluetooth service translator 88A. At 404, a new RFCOMM SCN is allocated for the new Bluetooth service profile by service channel allocator 92A. Then, at 408, a map between the new Bluetooth service profile and the queried SLP service is registered with service map 60A. Finally, at 412, the new Bluetooth service profile is registered in Bluetooth service directory 96A. Once the service is registered in Bluetooth service registry 96A, Bluetooth device 32A connected to end point 24A via WPAN 36A can query end point 24A to obtain information about the new service profile.

Upon the communication of service profiles available to a Bluetooth device 32A, method 100 is complete.

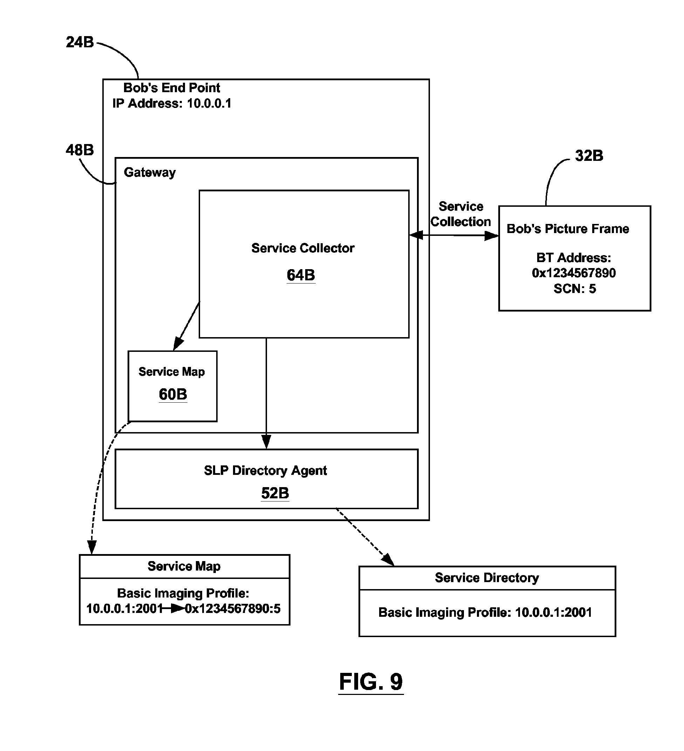

The whole procedure is best represented with a preferred implementation example of a user (e.g. Alice) wanting to transfer an image from a Bluetooth-enabled digital camera to a Bluetooth-enabled picture frame at a remote location where another user (e.g. Bob) is located. For purposes of the discussion, we will assume that Alice is proximal to end point 24A and that Bob is proximal to end point 24B. We first start with Bob's location and the discovery of service profiles of the picture frame. Figure 9 represents the local service collection and SLP registration for Bob's picture frame on his end point.

Suppose Bob's picture frame 32B supports the Basic Imaging Profile and its Bluetooth address is 0x1234567890, and the service profile is accessible via RFCOMM SCN 5. Also suppose the IP address of Bob's end point 24B is 10.0.0.1. During the service collection and registration procedure, Bob's gateway 48B will discover the service profile of picture frame 32B and register a new SLP service with SLP DA 52B with an IP address of 10.0.0.1 and a port number of 2001 (dynamically assigned). Therefore, when the service collection and registration is done, SLP DA 52B will have a service directory and service map 60B will maintain the translation between the Bluetooth service profile address and the registered SLP service profile of picture frame 32B.

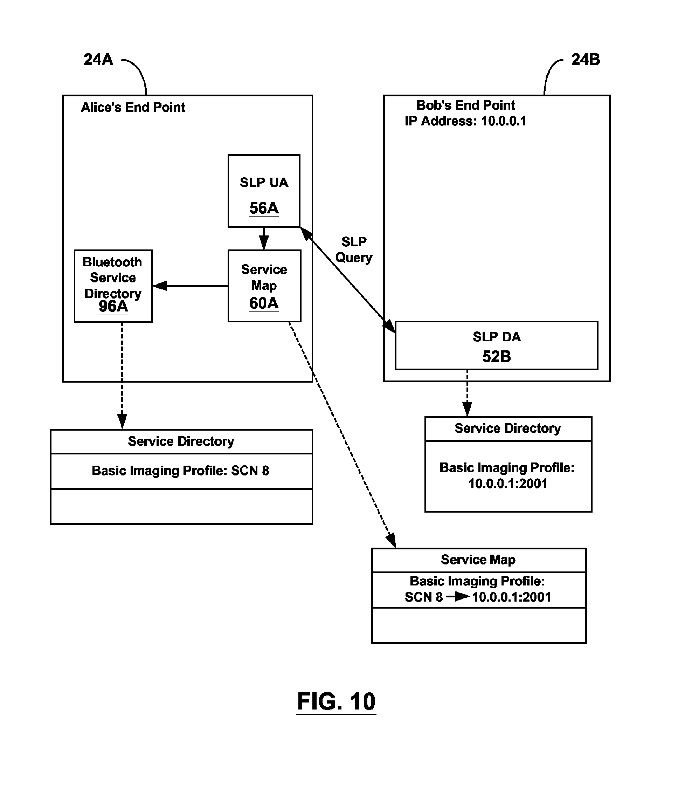

Figure 10 shows Alice's and Bob's end points 24A and 24B upon establishing a communication session. Once a connection is established, each SLP UA on each end point searches for SLP DA at the end points. Figure 10 shows SLP UA 56A on Alice's end point 24A querying SLP DA 52B for all service profiles available through Bob's end point 24B. SLP UA 56 then registers the remotely located services in Bluetooth service directory 96A on Alice's end point 24A, in accordance with the method illustrated in Figure 8. During this process, the Basic Imaging Profile is allocated SCN 8 and a mapping is created between the new Bluetooth service profile and the queried SLP service. Therefore, Alice's digital camera 32A can discover the basic imaging profile of Bob's picture frame 32B because it has been registered on Alice's end point 24A.

The above-noted discussion has focused on service profile registration and discovery of Bluetooth service profiles over an IP communication session. Another important aspect of the invention is the ability of Bluetooth devices local to end points participating in the IP-based session to be able to use the Bluetooth service profiles offered on remote end points. Bluetooth service profiles ensure that interpretability is maintained between devices by specifying a set of standard procedures of utilizing higher layer as well as lower level protocols of the Open Systems Interconnection ("OSI") model for purposes of communication.

As the Object Exchange (OBEX) protocol runs atop of Transmission Control Protocol over IP and on the Bluetooth protocols (that is, RFComm over L2Cap), and supports a number of Bluetooth service profiles, it provides a common platform upon which the Bluetooth service profiles are provided. The OBEX protocol is a binary application-level protocol similar to HTTP that allows a variety of devices to exchange data simply and spontaneously. The common protocol layer among all the devices and the end points is the OBEX layer. The end point, more particularly the gateway, replaces Bluetooth RFComm channel identifiers with TCP port numbers and vice versa. No other translations need to occur below the OBEX layer.

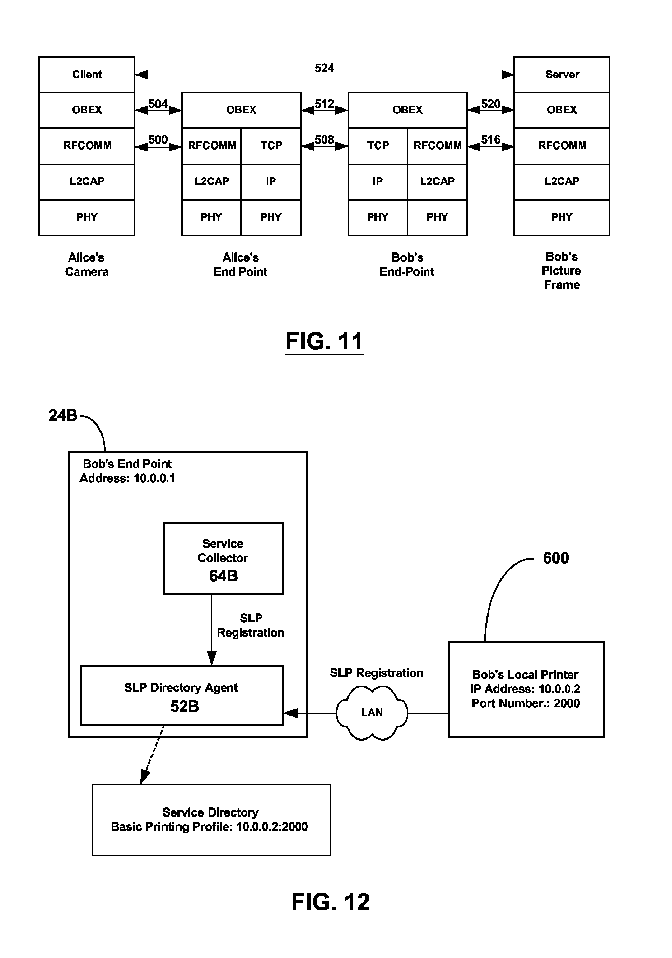

Figure 11 shows the various protocol stack translations and communications employed by the invention for the example of Bob and Alice as illustrated in Figure 10. At 500, a Radio Frequency Communications ("RFComm") connection is established between the Alice's end point and Alice's digital camera. At 504, the OBEX data containing the image is transferred to Alice's end point. Alice's end point, in turn, uses the service map created during the service discovery process to map the RFComm SCN to the proper IP address and port number of the Basic Imaging Profile on Bob's end point so that the proper TCP/IP socket connection can be opened between Alice's and Bob's end points at 508. The OBEX data is then transferred across to Bob's end point at 512. The gateway on Bob's end point determines the correct RFComm SCN based on its service map and sends the OBEX data to the appropriate device by establishing a connection with the device at 516 and then transmitting the OBEX information containing the image being transferred at 520, thus completing the communication between the client (Alice's digital camera) and the server (Bob's picture frame) at 524.

One important variation is the ability to handle Bluetooth service profiles that may not necessarily reside on devices that are on a Bluetooth PAN. This immediately allows the end point to host the service profile and removes the necessity of having a gateway on both end points. In fact, any networked device at the end point can offer a Bluetooth service profile by registering that service profile with the SLP DA in the end point.

To illustrate this configuration, the example illustrated in Figure 10 will now be re-examined where, instead of a Bluetooth-enabled picture frame, Bob's end point is in communication with a printer over TCP/IP. Another networked device, like the printer in this example, can register itself in the SLP DA of Bob's end point and be available to other end points that commence a session with Bob's end point. Figure 12 shows a local printer 600 having its service profile registered with SLP DA 52B of Bob's end point 24B. Printer 600 is a network printer connected to end point 24B via an Ethernet LAN and supports functionality analagous with the Basic Printing Profile on port 2000. Bob's end point 24B registers printer 600 in SLP DA 52B with the IP address of printer 600 and the port number assigned to the functionality on printer 600 that is analagous to the Basic Printing Profile.

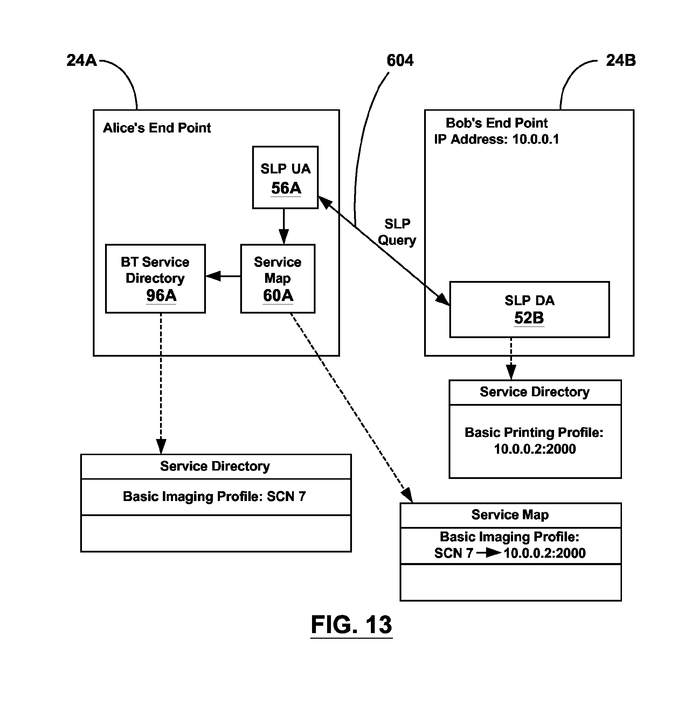

Figure 13 shows how printer 600 is made available on Alice's end point 24A to Bluetooth devices such as Alice's digital camera. SLP UA 56A on Alice's end point 24A performs an SLP query 604 of SLP DA 52B on Bob's end point 24B to obtain a list of service profiles available thereon. The Basic Printing Profile is passed to SLP UA 56A for printer 600 in the response from SLP DA 52B. An SCN, in this case 7, is allocated to printer 600 and a mapping of the translation is created and registered in service map 60A. The service profile for printer 600 is then registered with Bluetooth service directory 96A, allowing Bluetooth-enabled devices local to Alice's end point 24A to access the functionality available on printer 600 associated with the service profile.

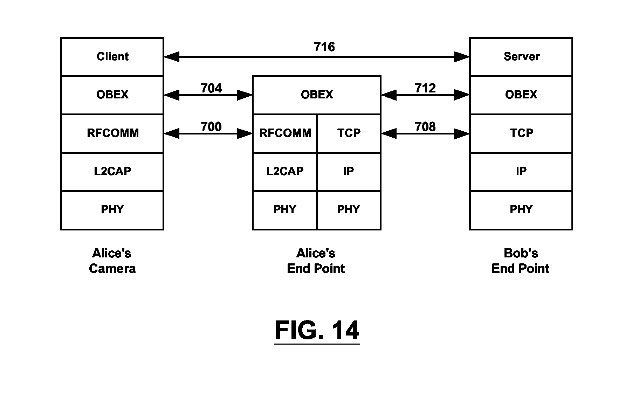

Figure 14 shows the various protocol stack translations and communications employed by the invention for the example illustrated in Figures 12 and 13. At 700, a RFComm connection is established between the Alice's end point and Alice's digital camera. At 704, the OBEX data containing the image is transferred to Alice's end point. Alice's end point, in turn, uses the service map created during the service discovery process to map the RFComm SCN to the proper IP address and port number of the Basic Imaging Profile on Bob's end point so that the proper TCP/IP socket connection can be opened between Alice's and Bob's end points at 708. The OBEX data is then transferred across to Bob's end point at 712, which, in turn, forwards the data to the printer as specified by the IP address of the service profile, thus completing the communication between the client (Alice's digital camera) and the server (Bob's printer) at 716.

While the invention has been described with specificity to Bluetooth, other types of wireless networking protocols will occur to those of skill in the art. For example, for IrDA devices that support profiles based on the Bluetooth Basic OBEX protocol, they could be supported by the configuration of end points with IrDA communication adapters.

Any protocol that supports the common protocol for exchanging service profiles can be used for communication between the end points. Further, any other common protocol for exchanging objects and service profiles can be used in place of OBEX. Additionally, any protocol for establishing a session between end points in place of SIP can be employed, such as PPP, etc.

While the invention has been illustrated specifically with respect to telephone sets, other devices will occur to those skilled in the art. For example, some or all of the components of the end points can be installed onto a computing device having the required networking capabilities, such as a computer with a Bluetooth module and an Ethernet network adapter, enabling the computer to act effectively as an end point.

Alternatively to registering the service profiles in SLP format, they can be registered, after translation from SLP format, in Bluetooth SDP or another format native to the local devices. Requests for a list of service profiles available through an end point in this configuration could be first translated to SDP format and the response could be translated from SDP format to SLP format prior to transmission. Such a configuration can be advantageous where local service profile requests outnumber remote service profile requests.

Other non-Bluetooth devices, such as a printer connected to an end point via an IP network, can be made accessible to Bluetooth devices connected to the same end point by translating the service profiles for the non-Bluetooth devices into the Bluetooth service directory.

The above-described embodiments of the invention are intended to be examples of the present invention and alterations and modifications may be effected thereto, by those of skill in the art, without departing from the scope of the invention which is defined solely by the claims appended hereto.

## Claims

1. A communications end point for communication with a remote device, comprising:
a service directory user agent operable to query a remote service directory on said remote device to obtain a service profile in a first format, said service profile identifying a set of functionality available through said remote device;
a first service translator in communication with said service directory user agent to obtain said service profile and generate a translation of said service profile from said first format to a second format accessible to a device connected to said end point via a personal area network;
a first local service directory in communication with said first service translator to receive and register said service profile; and
a service map in communication with said first service translator for receiving and registering said translation of said service profile between said first format and said second format,
such that said communications end point can receive a transmission from said device connected to said end point for said service profile in said second format, translate said transmission to said first format using said translation registered in said service map, and forward said transmission to said remote device.

2. A communications end point according to claim 1, wherein said service profile is registered in said first local service directory in said first format.

3. A communications end point according to claim 2, wherein said first format corresponds to Service Locator Protocol.

4. A communications end point according to claim 2, additionally comprising:
a second local service directory in communication with said first service translator for receiving and registering said service profile in said second format, said second local service directory being operable to receive and respond to a query from said device for a list of service profiles in said second format.

5. A communications end point according to claim 4, wherein said second format corresponds to Bluetooth Service Discovery Protocol.

6. A communications end point according to claim 4, additionally comprising:
a service locator in communication with said second local service directory, said service locator being operable to detect said device, determine a local service profile supported by said device and register said local service profile in said second local service directory in said second format.

7. A communications end point according to claim 5, further comprising:
a second service translator in communication with said second local service directory to obtain said local service profile and translate said local service profile from said second format to said first format, said second service translator also being in communication with said first local service directory to register said local service profile in said first format therein.

8. A communications end point according to claim 7, wherein said second service translator is in communication with said service map to register said local service profile in said first format and said second format in said service map.

9. A communications end point according to claim 8, further comprising:
a user agent in communication with said first local service directory and a network to receive a request via said network for a list of local service profiles accessible through said end point and respond with said local service profile in said second format.

10. A communications end point according to claim 1, wherein said communications end point and said remote device are in communication intermittently.

11. A communications end point for providing access to services supported by a device coupled to said communications end point over a personal area network, comprising:
a service collector in communication with a first device connected to said communications end point via a personal area network, said service collector querying said first device to obtain a list of service profiles supported by said device in a first format;
a service translator in communication with said service collector to obtain said list of service profiles and generate a translation of said list of service profiles from said first format to a second format supported by a second device coupled to said communications end point;
a service map in communication with said service translator for receiving and storing said translation; and
a service directory agent in communication with said service map to retrieve and store said list of service profiles in said second format in a service directory, and operable to respond to a query from said second device with said list of service profiles in said second format;
such that said second device can address communications to said first device via said communications end point to access functionality selected from said list of service profiles.

12. A communications end point according to claim 11, wherein said communications end point is operable to receive a service profile communication from said second device for said first device in said second format, retrieve said translation corresponding to said service profile communication, translate said service profile communication from said second format to said first format and transmit said service profile communication to said first device.

13. A communications end point according to claim 12, wherein said communications end point is operable to receive a service profile response from said second device for said first device in said first format, retrieve said translation corresponding to said service profile response, translate said service profile response from said first format to said second format and transmit said service profile response to said second device.

14. A communications end point according to claim 13, wherein said second device communicates with said communications end point via Session Initiation Protocol.

15. A communications end point according to claim 14, wherein said first device communicates with said communications end point via Bluetooth protocol.

16. A communications end point according to claim 15, wherein said list of service profiles comply with Object Exchange protocol.

17. A method of providing remote service discovery, comprising the steps of:
discovering a service profile in a first format on a remote device connected via a first network;
registering said service profile in said first format in a first service directory;
generating a translation of said service profile to a second format accessible to a local device connected via a second network;
registering said translation of said service profile in said second format in a second service directory;
registering said translation of said service profile in said first and second formats in a service map;
receiving a request from said local device for a list of service profiles; and
responding to said request by providing said service profile from said second service directory to said local device.
